# EUROPEAN PATENT APPLICATION

(11) **EP 0 772 128 A1**
(43) Date of publication of application: **07.05.1997**
(21) Application number: 96307490.1
(22) Date of filing: 15.10.1996
(51) Int. Cl.: G06F 12/08

(54) **Modifying data in a multi-processor data processing system**

(30) Priority: 06.11.1995 US 554016
(71) Applicant: INTERNATIONAL BUSINESS MACHINES CORPORATION, Armonk, NY 10504 (US)
(72) Inventor: Cheong, Hoichi, Austin, Texas 78759 (US); Cheng, Kai, Austin, Texas 78750 (US); So, Kimming, Austin, Texas 78746 (US); Wang, Jin Chin, Austin, Texas 78717 (US)
(74) Representative: Litherland, David Peter

(57) **Abstract**

A method and system for increasing the effective use of the bandwidth of a cross bar switch in a symmetrical multi-processor system (SMP). The SMP includes a plurality of processors each having a cache, at least one memory unit, and a cross bar switch connecting each one of the processors to the at least one memory unit. The at least one memory unit includes an intelligent memory directory unit which maintains the status of cache lines storing the same data, e.g. exclusive or shared. The use of the intelligent memory directory unit allows any one of the processors to use a single command for issuing either a shared store or a store miss, with the memory directory unit determining what the command was intended to perform and taking the appropriate action. By maintaining the status of the cache lines the memory directory unit eliminates the pinging associated with a processor issuing a shared store request only to have to reissue a store miss command.

## Description

The present invention generally relates to data processing systems, and more specifically to processing multiple store requests in a data processing system.

In a traditional Symmetrical Multi-Processor (SMP) system, data coherency is maintained by a relatively time consuming but effective procedure. For example, if a requestor (*e.g*., a central processing unit ("CPU"), or an input/output ("I/O") unit within the system desires a particular portion of data (*e.g*., a cache line), it will first determine whether or not the desired data is located within its local cache. If the data is not within the local cache of the requester, then a Load Miss (or Read Miss) request is sent to a memory unit, which controls memory for the SMP system, requesting that the data be supplied to the CPU from the system memory.

The above noted data coherency process has been enhanced and improved through the use of directory-based memory units. A directory-based memory unit (memory unit), typically, includes a directory that indicates where the most recent valid copy of data is located. The valid copy of data can be located in either the system memory or one or more of the CPUs within the SMP system. When two or more of the CPUs in the SMP system have valid (unmodified) copies of the same data in their respective caches, the state of the cache lines containing the copies are considered to have a status of shared. This relationship is reflected in the directory of the memory unit.

Whenever a CPU having a cache line with a status of shared desires to modify the data contained therein, the CPU must also have the exclusive right to modify the data. In other words, any other cache line having a status of shared and which is mapped to the same memory location must be invalidated to ensure data coherency. This is typically accomplished by having the CPU issue a request such as a "shared store" to the memory unit for the exclusive right to modify the data. Shared store, as referred to hereinafter, is the state in which a copy of the cache line of the requestor is owned by at least one other processor, and the requestor is requesting exclusive ownership of the data contained therein. In response to receiving the shared store request, the memory unit, if it is appropriate, will invalidate all other cache lines containing the data, and the requesting CPU is given the exclusive right to modify the data.

In such an SMP system, however, more than one of the CPUs, owning a shared cache lines may desire to modify the shared data at, essentially, the same time; thus, resulting in multiple shared store requests being sent to the memory unit. The memory unit is typically designed so as to process the multiple requests in a sequential fashion. Consequently, after the first request has been processed and the requesting CPU has obtained the exclusive right, all other requesting CPUs have the status of their respective cache lines set to invalid. Thus, any processing of those subsequent shared store requests by the memory unit results in notifying the subsequent requesting CPU that the request has failed, since the CPU no longer has a valid copy of the data to be modified. In response to receiving such a notification, the CPU will generally issue a new request for a "store miss". Store miss, as referred to hereinafter, is the state in which the requester does not have a copy of the data to be modified stored within its cache, and is requesting a copy of the data as well as exclusive ownership. The above noted process requires a large amount of valuable bus bandwidth.

It would, therefore, be a distinct advantage to have an improved method and system that would decrease the use of bus bandwidth for the processing of multiple shared store requests. The present invention seeks to provide such a method and system.

In one aspect, the present invention provides a method of processing requests issued from a plurality of processors in a data processing system to modify data, each of the processors having a cache, said method comprising the steps of: receiving, in a memory unit, a first and a second request issued from a first and a second processor of the processors, respectively, to modify the same specified data stored in first and second caches associated respectively with the first and second processors; processing the first request to provide the first processor with the exclusive right to modify the specified data; subsequently processing said second request to provide the second processor with a valid copy of the specified data and the exclusive right to modify the specified data.

In yet another aspect, there is provided a multi-processor system comprising: a plurality of processors each having a cache; a bus connected to each one of said plurality of processors; a memory unit connected to said bus, said memory unit including: means for storing data; means for receiving requests to modify said data issued from said plurality of processors; directory means for indicating said caches having a copy of said data, and for indicating whether any one of said caches has an exclusive right to modify said data; and means for processing said requests using said directory means.

A preferred embodiment of the invention will now be described, by way of example only, with reference to the accompanying drawings in which:
FIG 1 is a schematic diagram of a Symmetrical Multi-Processor system (SMP) 100 in which the present invention is practiced;
FIG. 2 is a schematic diagram illustrating in greater detail the various components of the memory unit of FIG. 1 according to the described embodiment of the present invention;
FIGs. 3A-3B are block diagrams illustrating an example of how the memory unit of FIG. 1 processes multiple store requests according to the described embodiment of the present invention; and
FIG. 4 is a flow chart illustrating the steps for the processing of a Read With Intention To Modify request by the memory directory logic of FIGS. 3A-3B according to the described embodiment of the present invention.

In the following description, numerous specific details are set forth such as specific word or byte lengths, etc. to provide a thorough understanding of the present invention. However, it will be obvious to those skilled in the art that the present invention may be practiced without such specific details. In other instances, well-known circuits have been shown in block diagram form in order not to obscure the present invention in unnecessary detail. For the most part, details concerning timing considerations and the like have been omitted in as much as such details are not necessary to obtain a complete understanding of the present invention and are within the knowledge of persons skilled in the relevant art.

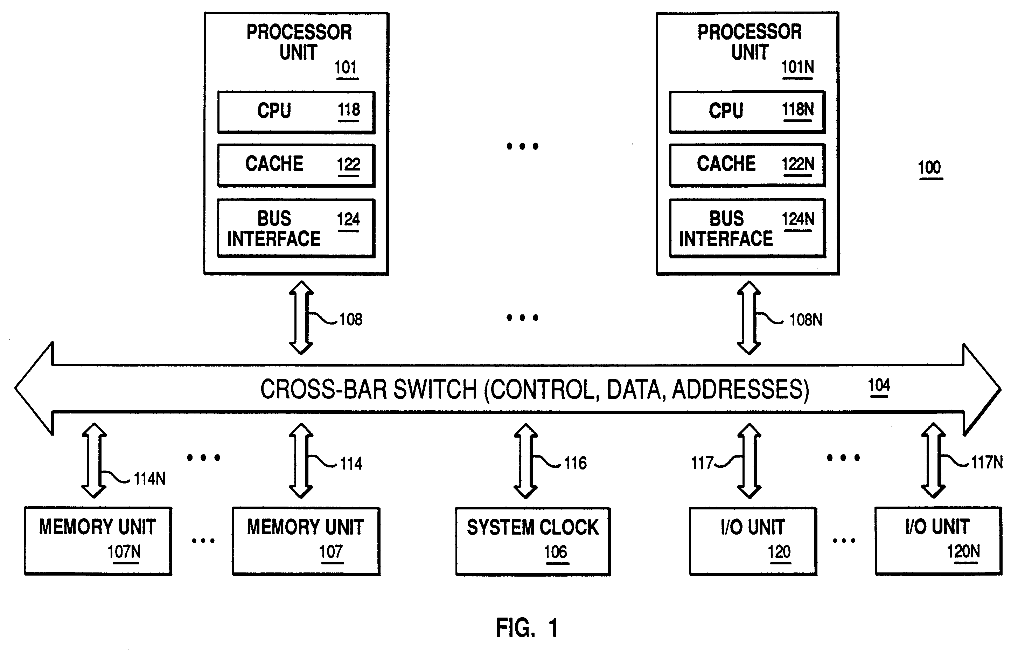

Reference now being made to Figure 1, a schematic diagram is shown of a Symmetrical Multi-Processor system (SMP) 100 in which the present invention is practiced. The SMP 100 includes a plurality of processor units 101-101N, a System clock 106, a plurality of Input/Output (I/O) units 120-120N, and a plurality of memory units 107-107N. Communication for the SMP 100 is implemented via a cross-bar switch 104, which is coupled to each one of the plurality of processor units 101-101N, the system clock 106, each one of the I/O units 120-120N, and each one of the memory units 107-107N, via bi-directional connections 108-108N, 116, 117-117N, and 114-114N, respectively.

Each one of the processor units 101-101N includes a Central Processing Unit (CPU) 118-118N, a local cache memory 122-122N, and a bus interface 124-124N, respectively. The local cache memory 122-122N may be, for example, a level one or level two cache. In general, cache memory is a relatively small high speed memory unit in which active portions of program instructions and/or data are stored.

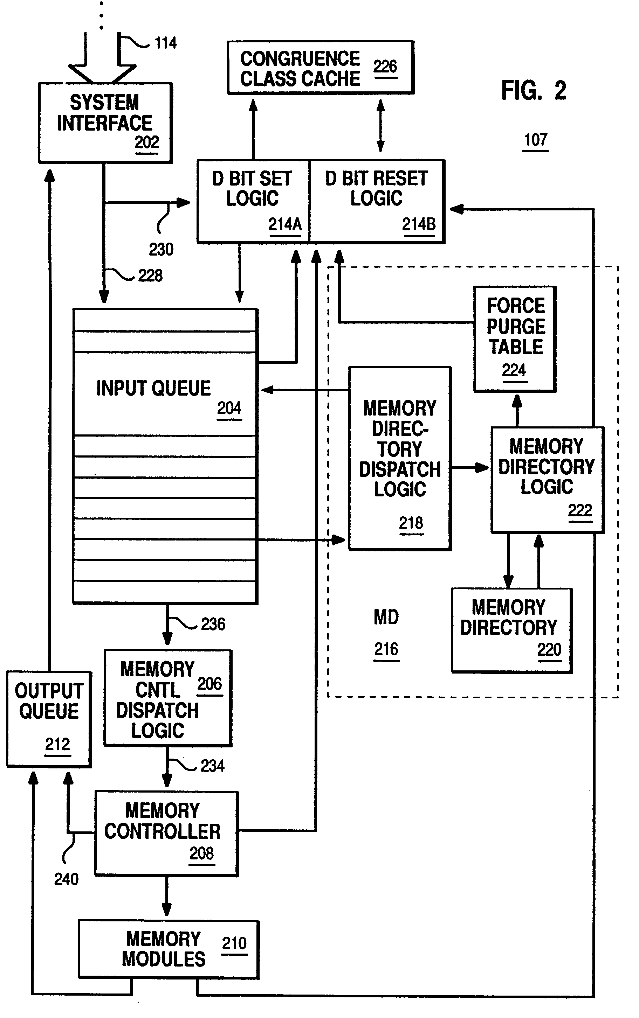

Reference is now made to FIG. 2, a schematic diagram is shown for illustrating in greater detail the various components of the memory unit 107 of FIG. 1 according to the teachings of the present invention. The memory unit 107 is the subject of US patent application serial number 08/430,079, entitled "A METHOD AND SYSTEM FOR PROCESSING MULTIPLE REQUESTS FOR DATA RESIDING AT THE SAME MEMORY ADDRESS", filed on April 27, 1995, a copy of which is available on the file of the present application.

Memory unit 107 comprises a system interface 202, D bit set logic 214A, D bit reset logic 214B, a Congruence Class Cache (CCC) 226, a Memory Directory Unit (MDU) 216, an input queue 204, memory control dispatch logic 206, a memory controller 208, memory modules 210, and an output queue 212. A brief summary of the various operations and functions for each one of the memory unit 107 components is given below.

System interface 202 receives transactions from any one of the processor units 101-101N, or any one of the I/O units 120-120N, and processes outgoing information stored within the output queue 212. Transactions received by the system interface 202 may be identified as either coherent or non-coherent. Coherent transactions, as referred to hereinafter, are transactions which require the latest copy of particular data within the memory hierarchy of the SMP 100 (FIG. 1). Non-coherent transactions, as referred to hereinafter, refer to those transactions which only require a correct order of memory access to a processor unit.

Input queue 204 stores coherent and non-coherent transactions received and processed by the system interface 202. D Bit set logic 214A sets Duplicate Bit (DB) flags associated with received coherent transactions. D Bit reset logic 214B resets DB flags associated with coherent transactions stored within the input queue 204.

MDU 216 includes memory directory dispatch logic 218, a force purge table 224, memory directory logic 222, and a memory directory 220. MDU 216 manages and processes coherent transactions stored within the input queue 204. The memory directory 220 stores a plurality of Congruence Class Directory (CCD) entries for storing information concerning cache lines belonging to the same Congruence Class (CC). A Congruence Class (CC), as referred to hereinafter, defines all cache lines which have addresses with the same bit patterns at predefined bit positions.

The term congruent class can be considered similar to the term "set" as used to define "set-associative caches". Set-associative caches are explained in detail in the book "Computer Architecture: A Quantitative Approach" (section 8.3, pages 408-414), by J. L. Hennessy and D.A. Patterson. In an n-way set-associative cache, each set contains up to n entries. Similarly, in an n-way congruent class memory directory design, each congruent class contains up to n entries.

Memory control dispatch logic 206 determines how to dispatch transactions received from the input queue 204. Memory controller 208 controls access to the memory modules 210. Output queue 212 stores information resulting from the processing of coherent and non-coherent transactions read from the input queue 204. This information is then relayed to the appropriate component within the SMP system 100 via system interface 202.

Congruence Class Cache (CCC) 226 stores entries (Congruence Class Cache entries) containing information pertaining to coherent transactions of the same Congruence Class (CC) which are stored within the input queue 204. Coherent and non-coherent transactions are received and processed by the memory unit 107 via the system interface 202 which is coupled to bi-directional connection 114. Each one of these received transactions are associated with a Duplicate Bit (DB) flag and stored within the input queue 204 via uni-directional path 228.

In general, the DB flag is used as a means for regulating the order in which the coherent transactions are processed, such that data coherency is maintained for the SMP system 100. If a DB flag is set for a particular coherent transaction, then the processing of that transaction is delayed until the DB flag is reset. If a DB flag is not set, then the transaction is processed in an orderly fashion.

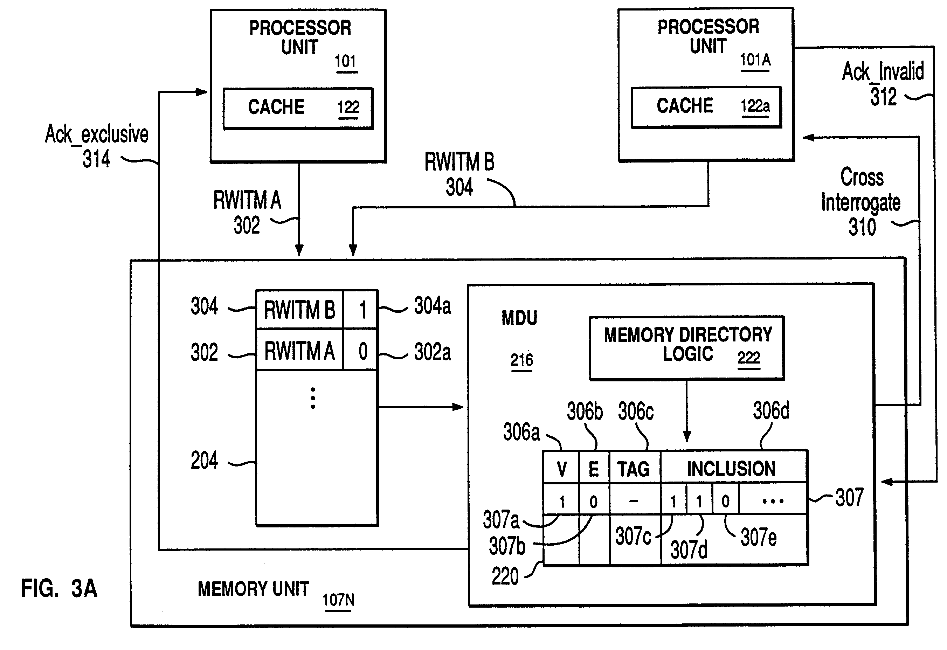

Reference now being made to FIG. 3A, a block diagram is shown illustrating an example of how the memory unit 107 of FIG. 1 processes multiple store requests according to this embodiment of the present invention. The various components of the memory unit 107 and their interaction with one another was previously discussed in connection with FIG. 2. Accordingly, only the input queue 204, the memory directory logic 222, and memory directory 220 are discussed in order to clarify the various novel aspects of the present invention. The memory directory 220 is used for maintaining information concerning each one of the cache lines for processor units 101-101N. In the preferred embodiment of the present invention the memory directory 220 maintains the following four fields:
(1) valid (V) 306a;
(2) exclusive (E) 306b;
(3) tag information (TAG) 306c; and
(4) Inclusion bit information 306d.

The valid field 306a is used for indicating whether or not the data represented by an entry in the memory directory 220 is valid, and is one bit in length. If the valid field 306a is set, then the data represented by the corresponding entry is valid. Conversely, if the valid field 306a is reset, then the data represented by the corresponding entry is invalid. Data may become invalid for any number of reasons, for example, where the owner of the cache line returns ownership to memory.

The exclusive field 306b is used for indicating whether or not an exclusive right to modify the data is held exclusively by a single one of the processor units 101-101n, or whether two or more of the processor units 101-101n are currently sharing the data. The exclusive field 306b is also represented by one bit. If the exclusive field is set, then a single one of the processor units 101-101n has the exclusive right to modify its copy of the data. Conversely, if the exclusive field is reset 306b, then one or more of the processor units 101-101N are currently sharing a copy of the data, i.e., none of the shared owners has the exclusive right to modify the data.

The tag field 306c is representative of current methods for using a tag for mapping the location of the data within main memory, and therefore, no further discussion is required.

The inclusion field 306d uses a single bit to represent each one of the processor units 101-101N of the SMP 100. Accordingly, the length of the inclusion field 306d is determined by the number of processor units supported by a particular SMP. If any of the inclusion field 306d bits are set, then the processing units corresponding to the position of the set bit contain a copy of the data.

In this example, it can be assumed that the local caches 122 and 122a, of respective processor units 101 and 101a, both have a copy of X data. It can be further assumed that at some point in time, the processor unit 101 determines that it is necessary to modify X data. In conventional SMP systems the processor unit 101 would issue a "shared store" request to memory unit 107 in order to obtain the exclusive right to modify X data. In the preferred embodiment of the present invention, however, the "shared store" has been merged with the "store miss" request, and referred to hereinafter as Read With Intention To Modify (RWITM) . Accordingly, the processor unit 101 issues a RWITM A 302 request to memory unit 107.

At a subsequent point in time before the processing of the RWITM A 302 request has finished, processor unit 101a determines that it is necessary to modify its copy of X data. Accordingly, processor unit 101a issues a RWITM B 304 request to memory unit 107.

The memory unit 107 receives the RWITM A 302 and the RWITM B 304 requests, and stores them in the input queue 204. As previously discussed in connection with FIG. 2, the RWITM A 302 and RWITM B 304 requests are associated with DB flags 302a and 304a, respectively, and processed in a sequential manner. In this example, RWITM A 302 arrived first in the input queue 204, and therefore, is processed first. Accordingly, the DB flag 302a is set equal to zero. The RWITM B 304 request arrived second in the input queue 204, and therefore, its processing is delayed until the processing of the RWITM A 302 request is complete. Consequently, the DB flag 304a is set equal to one to implement this delay.

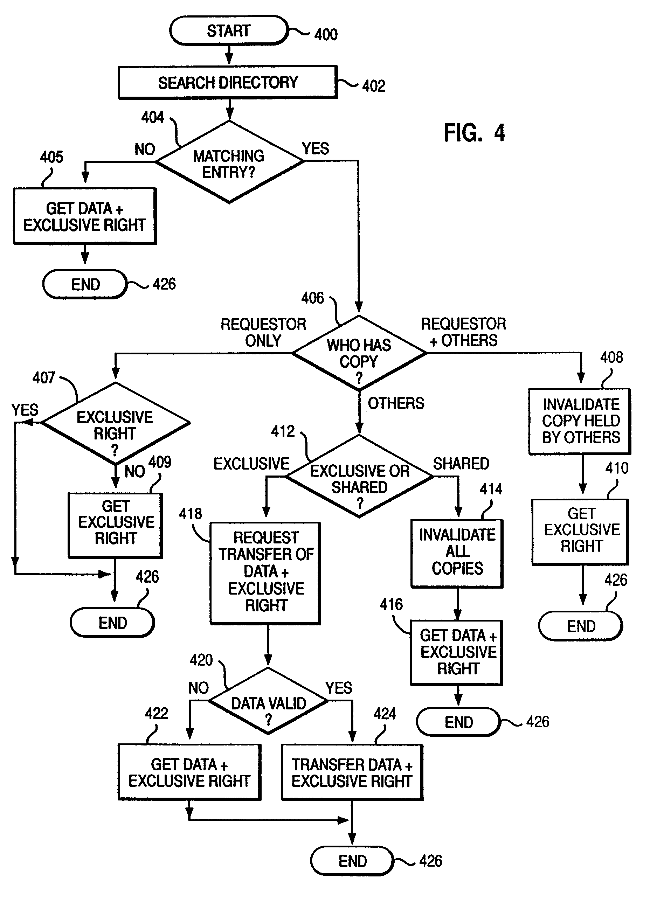

The processing of the RWITM A 302 request by MDU 216 begins with the locating of a memory directory 220 entry representing the state of the X data in respect to any one of the processor units 101-101N. In this example, entry 307 is the correct entry for representing this relationship. Upon examination of the 307 entry, it can be seen that the valid bit 307a is set equal to one which indicates that any copy of the X data residing in any of the caches 122-122N is valid. The exclusive bit 307b is set equal to zero to indicate that there is currently more than one processor unit 101-101n owning a copy of X data in its corresponding cache 122-122N. Inclusion bits 307c and 307d are set to indicate that the caches 122 and 122a of processor units 101 and 101a, respectively, both have a copy of the X data. The processing of the RWITM A 302 request continues by having the memory directory logic 222 determine whether the RWITM A 302 request also requires a copy of X data, which is explained in detail in connection with FIG. 4.

Reference now being made to FIG. 4, a flow chart is shown for illustrating the steps for the processing of a RWITM request by the memory directory logic 202 of FIGS. 3A-3B according to the preferred embodiment of the present invention. The process begins at step 400 upon the receipt of a RWITM request by the MDU 216. The process then proceeds to step 402 where the memory directory is searched for an entry representing the requested data, hereinafter referred to as X data. Thereafter, the process proceeds to step 404 where it is determined whether or not a matching entry has been found. If, at step 404, no matching is found i.e., none of the processors 101-101N have a copy of the X data stored in their respective cache, then the process proceeds to step 405 where the X data is retrieved from the memory unit 107, and the process proceeds to end at step 426.

If, however, at step 404, a matching entry is found, then process proceeds to step 406 where the fields 306a-306d of the matching entry are examined, as previously discussed, to determine the status of any processor 101-101N having a copy of the X data.

If the requesting processor 101-101N is the only processor 101-101N having a copy of X data, then the process proceeds to step 407 where it is determined whether or not the requesting processor 101-101N has the exclusive right to modify the X data. If, at step 407, it is determined that the requesting processor 101-101N has the exclusive right to modify the X data, then the process proceeds to end at step 426. If, however, at step 407, it is determined that the requesting processor 101-101N does not have the exclusive right to modify the X data, then the process proceeds to step 409 to get the exclusive right. Thereafter, the process proceeds to end at step 426.

If, at step 406, it is determined that the requesting processor 101-101N and at least one other processor 101-101N has a copy of the X data, i.e. the X data has a status of shared, then the process proceeds to step 408. At step 408, all non-requesting processors 101-101N, having a copy of the X data, have their copies of the X data invalidated. Thereafter, the process proceeds to step 410 where the requesting processor 101-101N gets the exclusive right to modify the data, and the process proceeds to end at step 426.

If, at step 406, it is determined that only at least one nonrequesting processor 101-101N has a copy of the X data, then the process proceeds to step 412. At step 412, it is determined whether or not the status of the at least one non-requesting processor 101-101 is either exclusive or shared. If the status of the at least one non-requesting processor 101-101N is shared, then the process proceeds to step 414 where all copies of the X data held by the at least one non-requesting processors 101-101N are invalidated. Thereafter, the process proceeds to step 416 where the requesting processor 101-101N is granted the exclusive right to modify the X data and a copy of the X data is provided to the requesting processor 101-101N.

If, at step 412, it is determined that a non-requesting processor 101-101N has the exclusive right to modify the X data, then the process proceeds to step 418 where the non-requesting processor 101-101N is cross interrogated by the MDU 216 to transfer the X data and the exclusive right to the requesting processor 101-101N. Upon receiving this request, at step 420, the non-requesting processor 101-101N determines whether or not its copy of the X data is still valid. If the copy of X data is valid, then the process proceeds to step 424. If, however, at step 420, it is determined that the copy of the X data is invalid, then the process proceeds to step 422.

At step 424, the copy of X data and the exclusive right are transferred to the requestor using a cache-to-cache transfer as described in co-pending European patent application EP-A-726522. Thereafter, the process ends at step 426.

At step 422 the requesting processor 101-101N retrieves a copy of the X data and is granted the exclusive right to modify the X data. Thereafter, the process ends at step 426.

Reference once again being made to FIG. 3A, in this particular instance, the requesting processing unit 101 has a copy of X data, and therefore, only needs to have the exclusive right to modify the X data provided by the MDU 216. The exclusive right is provided to the processing unit 101 by first transmitting a cross interrogation request 310 from MDU 216 to the processor unit 101a for invalidating its copy of the X data within its cache 122a. Once the processing unit 101a has invalidated its copy of the X data, it notifies MDU 216 via the transmission of an Ack_Invalid 312 signal. After receiving the Ack_Invalid 312 signal, the MDU 216 notifies the processing unit 101 that it now has the exclusive right to modify the X data via the transmission of an Ack_Exclusive 314 signal.

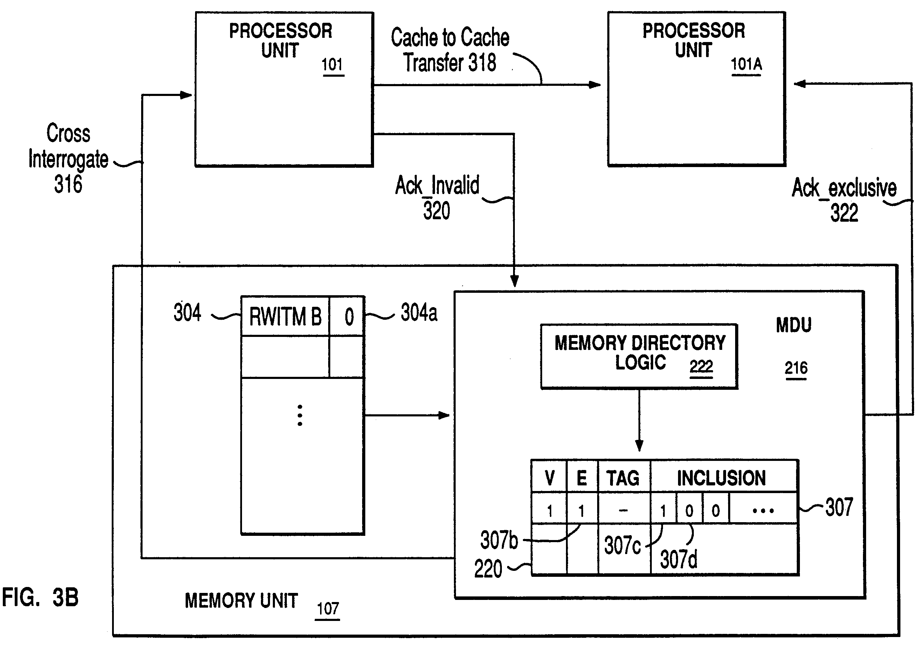

Reference now being made to FIG. 3B, since the RWITM A 302 request has been processed, the DB flag 304a is set equal to zero so that the processing of the RWITM B 304 request can begin. The processing begins with the searching of the memory directory 220 for the entry representing the state of the X data in respect to any one of the processor units 101-101N. Once again, entry 307 is the correct entry for representing this relationship. It should be noted, however, that the fields of entry 307 have been updated to represent the processing of the previous RWITM A 302 request. Consequently, the exclusive field 307b has been set to one to indicate that the designated processing unit represented by the inclusion bit 307c has the exclusive right to modify the X data. Accordingly, the inclusion bit 307d has been set equal to zero to indicate that the processing unit 101a no longer has a valid copy of the X data.

The memory directory logic 222 processes the RWITM B 304 request via the steps as previously explained in connection with FIG. 4. In this instance, the MDU 216 transmits a cross interrogate 316 to processing unit 101 to transfer the copy of X data contained in cache 222 to cache 222a, and to invalidate its copy. Consequently, a cache 222 to cache 222a transfer is performed as represented by designation 318, and the copy of the X data in cache 222 invalidated. This is acknowledged by the transmission of an Ack_Invalid signal 320 from processor unit 101 to the MDU 216. Accordingly, the MDU 216 transmits an Ack_Exclusive signal 322 to the processor unit 101a to indicate that it now has the exclusive right to modify its copy of the X data.

In a typical prior SMP system, the above processing of RWITM B 304 would differ in the following respects. First, neither processing unit 101 nor 101a would have issued a RWITM request, but rather, a shared store request. Consequently, after the processing of the shared store request from processor unit 101 had been completed, the processing of the shared store request by processor unit 101a would have resulted in the notification to the processor unit 101a that the request failed. Resulting, in the processor unit 101a re-issuing a store miss request to MDU 216. This procedure would unnecessarily use valuable bandwidth of the cross bar switch 104.

It is thus believed that the operation and construction of the present invention will be apparent from the foregoing description. While the method and system shown and described has been characterized as being preferred, it will be readily apparent that various changes and/or modifications could be made therein without departing from the scope of the present invention as defined in the following claims.

## Claims

1. A method of processing requests issued from a plurality of processors in a data processing system to modify data, each of the processors having a cache, said method comprising the steps of:
receiving, in a memory unit, a first and a second request issued from a first and a second processor of the processors, respectively, to modify the same specified data stored in first and second caches associated respectively with the first and second processors;
processing the first request to provide the first processor with the exclusive right to modify the specified data;
subsequently processing said second request to provide the second processor with a valid copy of the specified data and the exclusive right to modify the specified data.

2. The method as claimed in claim 1 wherein said memory unit includes a memory directory having entries for indicating the status of cache lines having copies of data stored in said memory unit, and said step of processing said first request includes the steps of:
locating in said memory directory an entry corresponding to said specified data;
determining from said located entry that copies of said specified data resides in said first and second caches;
invalidating said copy of said specified data in said second cache; and
providing said first processor with the exclusive right to modify said specified data.

3. The method as claimed in claim 2 wherein said step of processing said second request includes the steps of:
locating in said memory directory said entry;
determining from said located entry that a copy of said specified data resides in said first cache, and that said first processor has the exclusive right to modify said specified data; requesting said first processor to transfer its copy of said specified data to said second processor; and
providing said second processor with the exclusive right to modify said specified data.

4. The method as claimed in claim 3 wherein each one of said entries includes a tag, an exclusive bit, and an inclusion field, wherein each one of said bits of said inclusion field are used for representing one of said plurality of processors having a copy of data represented by said tag, and said step of determining from said located entry that copies of said specified data reside in said first and second caches includes the steps of:
determining that said located exclusive bit is not set; and
determining that copies of said specified data reside in said first and second caches from said inclusion field bits representing said first and second processors being set.

5. The method as claimed in claim 4 wherein said step of invalidating said copy of said specified data in said second cache includes the step of:
resetting said located inclusion field bit representing said second processor.

6. The method as claimed in claim 5 wherein said step of providing said first processor with the exclusive right to modify said specified data includes the step of:
setting said located exclusive bit.

7. The method as claimed in claim 6 wherein said step of determining from said located entry that a copy of said specified data resides in said first cache, and that said first processor has the exclusive right to modify said specified data includes the steps of:
determining that said first cache has a copy of said specified data from said located inclusion field bit representing said first processor being set; and
determining that said first processor has the exclusive right to modify said specified data from said located exclusive bit being set.

8. The method as claimed in claim 7 wherein said step of providing said second processor with the exclusive right to modify said specified data includes the step of:
resetting said located inclusion field bit representing said first processor.

9. The method as claimed in claim 8 wherein said first and second request issue the exact same command to said memory unit.

10. A multi-processor system comprising:
a plurality of processors (101...101N) each having a cache (122...122N);
a bus (108...108N) connected to each one of said plurality of processors;
a memory unit (107...107N) connected to said bus, said memory unit including:
means for storing data;
means (202, 204) for receiving requests to modify said data issued from said plurality of processors;
directory means (216) for indicating said caches having a copy of said data, and for indicating whether any one of said caches has an exclusive right to modify said data; and
means (222) for processing said requests using said directory means.

11. The data processing system as claimed in claim 10 wherein said means for receiving includes:
means for receiving a first and a second request issued from a first and second processor of said processors, respectively, to modify the same specified data stored in said first and second caches.

12. The data processing system as claimed in claim 11 wherein said means for processing includes:
means for processing said first request to provide said first processor with the exclusive right to modify said specified data; and
means for processing said second request to provide said second processor with a valid copy of said specified data and the exclusive right to modify said specified data.

13. The data processing system as claimed in claim 12 wherein said directory means includes:
a memory directory having entries for indicating the status of cache lines having copies of data stored in said memory unit.

14. The data processing system as claimed in claim 13 wherein said means for processing said first request includes:
means for locating in said memory directory an entry corresponding to said specified data;
means for determining form said located entry that copies of said specified data reside in said first and second caches;
means for invalidating said copy of said specified data in said second cache; and
means for providing said first processor with the exclusive right to modify said specified data.

15. The data processing system as claimed in claim 14 wherein said means for processing said second request includes:
means for locating in said memory directory said entry;
means for determining from said located entry that a copy of said specified data resides in said first cache, and that said first processor has the seclusive right to modify said specified data;
means for requesting said first processor to transfer its copy of said specified data to said second processor; and
means for providing said second processor with the exclusive right to modify said specified data.

16. The data processing system as claimed in claim 15 wherein each one of said entries includes:
a tag;
an exclusive bit; and
an inclusion field, wherein each one of said bits of said inclusion field are used for representing one of said plurality of processors.

17. The data processing system as claimed in claim 16 wherein means for determining from said located entry that copies of said specified data reside in said first and second caches includes:
means for determining that said located exclusive bit is not set; and
means for determining that copies of said specified data reside in said first and second caches from said located inclusion field bits representing said first and second processors being set.

18. The data processing system as claimed in claim 17 wherein said means for invalidating said copy of said specified data in said second cache includes:
means for resetting said located inclusion field bit representing said second processor.

19. The data processing system as claimed in claim 18 wherein said means for providing dais first processor with the exclusive right to modify said specified data includes:
means for setting said located exclusive bit.

20. The data processing system as claimed in claim 19 wherein said means for determining from said located entry that a copy of said specified data resides in said first cache, and that said first processor has the exclusive right to modify said specified data includes:
means for determining that said first cache has a copy of said specified data from said located inclusion field bit representing said first processor being set; and
means for determining that said first processor has the exclusive right to modify said specified data from said located exclusive bit being set.

21. The data processing system as claimed in claim 20 wherein said means for providing said second processor with the exclusive right to modify said specified data includes:
means for resetting said located inclusion field bit representing said first processor.
